# FASCICULE DE BREVET EUROPEEN

(11) **EP 3 739 843 B1**
(45) Date de publication et mention de la délivrance du brevet: **27.07.2022**
(21) Numéro de dépôt: 20185234.0
(22) Date de dépôt: 16.06.2017
(51) Int. Cl.: H04L 67/14, H04L 69/14, H04L 69/16

(54) **PROCÉDÉ DE COMMUNICATION UDP VIA DES CHEMINS MULTIPLES ENTRE DEUX TERMINAUX**
UDP-KOMMUNIKATIONSVERFAHREN ÜBER MULTIPLE KOMMUNIKATIONSWEGE ZWISCHEN ZWEI ENDGERÄTEN
UDP COMMUNICATION METHOD VIA MULTIPLE PATHS BETWEEN TWO TERMINALS

(30) Priorité: 24.06.2016 FR 1655907
(43) Date de publication de la demande: 18.11.2020
(62) Demande divisionnaire de: 17737324.8
(73) Titulaire: ORANGE, 92130 Issy-les-Moulineaux (FR)
(72) Inventeur: BOUCADAIR, Mohamed, 92326 Châtillon Cedex (FR); JACQUENET, Christian, 92326 Châtillon Cedex (FR)

(56) Documents cités:
- US-A1- 2013 064 198
- US-A1- 2014 269 289
- JIHYEOK YUN ET AL: "Scenario of UDP based Multipath MMT: TRUFFLE", 115. MPEG MEETING; 30-5-2016 - 3-6-2016; GENEVA; (MOTION PICTURE EXPERT GROUP OR ISO/IEC JTC1/SC29/WG11),, no. m38525, 28 mai 2016 (2016-05-28), XP030066881,

## Description

La présente invention concerne le domaine des télécommunications, et notamment les réseaux de communications aptes à mettre en œuvre le protocole IP (Internet Protocol). Plus particulièrement, la présente invention concerne la fourniture de services dans les réseaux IP « à valeur ajoutée », c'est-à-dire les réseaux capables d'effectuer des traitements différenciés selon la nature du trafic acheminé dans le réseau.

L'invention s'applique en particulier à tout type de dispositif-client (« *User Equipment* » en anglais) tel qu'un terminal fixe ou mobile, une « TV connectée », ou une passerelle résidentielle (c'est-à-dire une passerelle domestique ou située dans une entreprise), ou une passerelle d'opérateur réseau (« *Gateway* » en anglais), ou encore un décodeur TV (« *Set-Top Box* », ou STB en anglais). Par souci de concision, un dispositif-client de n'importe quel type sera souvent appelé « terminal » ci-après.

Les terminaux, tels que les téléphones intelligents (« *smartphone* » en anglais) et les ordinateurs personnels (« *Personal Computer* », ou PC en anglais) sont désormais capables d'activer et d'exploiter plusieurs interfaces logiques liées à une ou plusieurs interfaces physiques. De tels terminaux sont dits « multi-interfaces » (« *Multi-Interface* », ou MIF en anglais). Lorsqu'un terminal dispose de plusieurs interfaces capables de le raccorder à différents réseaux d'accès (par exemple : fixe, mobile, ou WLAN), il bénéficie alors d'un accès dit « hybride », parce qu'il combine différentes technologies de réseaux d'accès.

Plusieurs adresses IP peuvent alors être attribuées à un terminal MIF. Ces adresses sont utilisées lorsqu'il se connecte à différents types de réseaux tels qu'un réseau fixe, un réseau mobile ou un réseau WLAN (initiales des mots anglais « *Wireless Local Area Network* » signifiant « Réseau Local Sans-Fil », dont les réseaux Wi-Fi sont un exemple emblématique), de manière simultanée ou différée. Ces adresses IP peuvent :
- appartenir à la même famille d'adresses ou à des familles d'adresses distinctes (IPv4, IPv6 ou les deux),
- avoir des durées de vie différentes,
- avoir des portées différentes, par exemple adresse IPv4 privée, adresse IPv6 unique de portée locale (*Unique Local Address,* ou ULA en anglais), ou adresse IPv6 de portée globale (*Global Unicast Address,* ou GUA en anglais), et
- être affectées à la même interface réseau logique ou à différentes interfaces réseau logiques.

On notera toutefois que la caractéristique « MIF » est volatile, car la capacité d'utiliser plusieurs interfaces dépend des conditions de raccordement au(x) réseau(x), de la localisation du dispositif, ou d'autres facteurs. Un dispositif peut devenir MIF en cours d'établissement d'une communication simple (c'est-à-dire, une communication établie le long d'un chemin unique avec un correspondant donné), ou même après l'établissement d'une communication simple. On notera également qu'un dispositif ne sait pas a priori s'il lui est possible d'utiliser *plusieurs* chemins distincts pour établir une communication avec un correspondant donné ; plus précisément, le dispositif n'acquiert cette information (le cas échéant) qu'à l'issue d'une phase au cours de laquelle il tente d'établir une communication utilisant des chemins multiples avec le correspondant.

On rappelle qu'une « communication à chemins multiples » est une communication établie entre deux dispositifs empruntant simultanément un ou plusieurs chemins entre ces deux dispositifs. L'établissement et le maintien en activité d'une telle communication reposent sur l'utilisation d'un protocole dédié, tel que MPTCP (Multi-Path TCP), qui peut éventuellement être défini comme une extension d'un protocole de transport défini antérieurement, tel que TCP (initiales des mots anglais « *Transmission Control Protocol* » signifiant « Protocole de Contrôle de Transmission »). Autrement dit, une communication à chemins multiples est un agrégat d'une ou plusieurs communications simples empruntant un même chemin ou des chemins différents (partiellement ou complètement disjoints).

On rappelle également que, dans le domaine des réseaux, on appelle « agrégation de liens » le regroupement de plusieurs liens associés à autant d'interfaces (logiques) comme s'il s'agissait d'un seul lien associé à une seule interface, notamment dans le but d'accroître le débit au-delà des limites d'un seul lien, mais également d'appliquer les mêmes procédures d'exploitation à l'ensemble des liens ainsi agrégés (notion de « *fate sharing* » en anglais). En particulier, les offres de services concernant un terminal disposant d'un accès hybride reposent sur l'introduction dans le réseau de fonctions permettant d'agréger l'ensemble des communications réseau d'un terminal (par exemple : WLAN et 3G, ou ADSL, WLAN et 4G).

L'agrégation de liens permet aussi de faire en sorte que d'autres interfaces prennent le relais si un lien réseau tombe en panne (principe de redondance). L'agrégation de liens s'applique à tout type de trafic acheminé le long de ces liens, y compris du trafic IP.

L'agrégation de liens peut également être utilisée pour répartir le trafic sur plusieurs liens. Dans ce cas, la répartition de trafic entre des liens qui font l'objet d'un agrégat dépend de divers paramètres ; la répartition de trafic peut ainsi dépendre de la politique d'ingénierie de trafic (par exemple privilégier l'acheminement d'un trafic particulier sur un lien dont les caractéristiques en termes de robustesse ou de disponibilité sont compatibles avec la nature dudit trafic), ou de la politique de Qualité de Service (« *Quality of Service* », ou QoS en anglais) qui peut par exemple privilégier certains liens dans un contexte de priorisation de trafic.

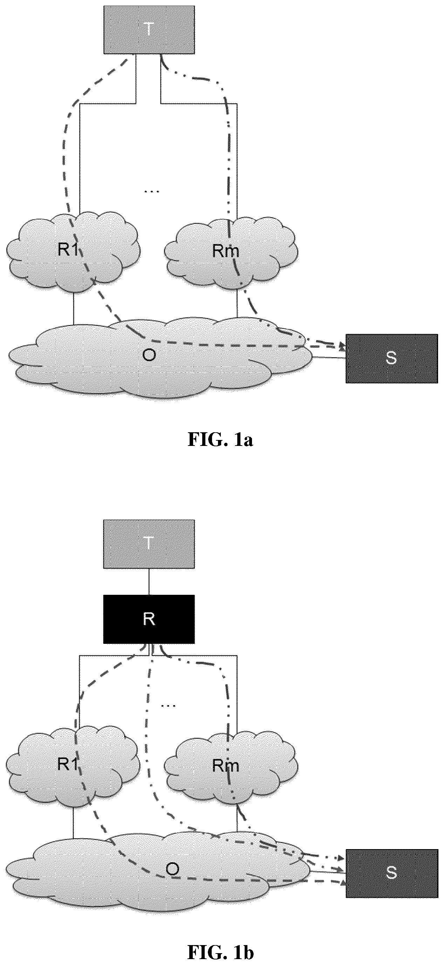

A titre d'exemple, on a représenté sur la **figure 1a** un terminal T qui communique avec un serveur S via plusieurs réseaux IP notés R1, ..., Rm et O, en mettant en œuvre un protocole de communication à chemins multiples. La nature des différents réseaux d'accès R1, ..., Rm peut être filaire, sans-fil, ou autre. Par ailleurs, le terminal T peut avoir la capacité de se connecter à différents réseaux d'accès de manière simultanée ou non.

De même, on a représenté sur la **figure 1b** un terminal T placé derrière un équipement, dit dispositif-relais R ; ce dispositif-relais R communique avec un serveur S via plusieurs réseaux IP notés R1, ..., Rm et O, en mettant en œuvre un protocole de communication à chemins multiples.

De manière générale, on appellera « dispositif-relais » un équipement localisé dans le réseau et agissant au nom d'un ou de plusieurs dispositif-clients, tels qu'un terminal ou une passerelle. Cette configuration permet au dispositif-client de bénéficier d'un usage optimisé des ressources réseau disponibles, et également d'établir des communications à chemins multiples dans un délai réduit.

On notera que l'agrégation de liens ne fait aucune hypothèse quant à la configuration de la machine distante. Ainsi, une machine source peut solliciter une fonction d'agrégation de liens sans que la machine distante n'utilise une telle fonction.

Divers modes d'agrégation peuvent être envisagés, parmi lesquels les trois modes suivants :
- mode de repli (« *backup* » en anglais) : ce mode consiste à utiliser des chemins secondaires en cas d'indisponibilité des chemins primaires, et ce, afin d'améliorer la disponibilité réseau et, partant, la robustesse et la fiabilité des communications IP établies sur les différents liens ;
- mode associatif (« *bonding* » en anglais) : ce mode consiste à utiliser les ressources associées à tout ou partie des chemins disponibles, les flux IP associés à une même application pouvant être répartis entre plusieurs chemins ; le choix d'exploiter l'intégralité des chemins, ou seulement une partie d'entre eux, peut par exemple être conditionné par la nature du trafic ou les caractéristiques de disponibilité ou de fiabilité associées à chaque chemin, lesquelles peuvent varier fortement d'un chemin à l'autre ; tous les chemins sélectionnés pour ce mode associatif sont considérés comme étant des chemins primaires ; et
- mode dit de « confort » : ce mode est similaire au mode associatif, si ce n'est que les flux d'une application donnée ne sont pas répartis entre plusieurs chemins, mais sont envoyés sur un seul chemin.

On notera que ces modes ne sont pas mutuellement exclusifs, et ne sont pas spécifiques à un type particulier de trafic. Ainsi, ils peuvent être mis en place indépendamment de la nature du trafic qui sera acheminé le long des chemins agrégés selon l'un ou l'autre des différents modes.

Les protocoles de transport majoritairement utilisés par les applications logicielles pour communiquer sur Internet sont TCP (mentionné ci-dessus) et UDP (initiales des mots anglais « *User Datagram Protocol* » signifiant « Protocole de Datagramme Utilisateur »). A ce titre, les moyens techniques permettant à un dispositif-client/dispositif-relais d'optimiser l'usage des ressources réseaux disponibles en fonction des besoins et des contraintes des applications reposant sur TCP ou UDP sont de nature à apporter une amélioration significative du niveau de qualité associé à l'utilisation de telles applications. De plus, certains acteurs de l'Internet sont en train d'expérimenter à grande échelle des solutions alternatives à TCP qui reposent sur UDP (et, plus précisément, sur un schéma d'encapsulation). De ce point de vue, les fournisseurs de service et opérateurs de réseaux IP ont à cœur de fournir un niveau de qualité d'utilisation comparable entre des applications reposant sur TCP et celles reposant sur UDP.

Il est donc souhaitable de disposer d'une parité fonctionnelle aussi large que possible entre TCP et UDP. En particulier, il serait utile de pouvoir établir des communications UDP *via* des chemins multiples de manière fonctionnellement comparable aux solutions techniques connues, telles que le protocole MPTCP mentionné ci-dessus, qui permettent l'établissement de connexions TCP *via* des chemins multiples.

Dans le cadre de la présente invention, on appelle « datagramme UDP » un paquet IP transporté selon le protocole UDP.

Une solution à ce problème a été proposée dans le document (« draft-Internet ») de M. Boucadair *et al.* soumis à l'IETF (Internet Engineering Task Force) et intitulé « *An MPTCP Option for Network-Assisted MPTCP Deployments: Plain Transport Mode* ». Cette solution utilise le protocole MPTCP pour acheminer en particulier du trafic UDP dans le contexte d'une connexion MPTCP. Dans le cas du trafic UDP, la solution consiste à transformer des datagrammes UDP en des paquets TCP. A cet effet, les auteurs ont défini une option TCP spécifique, qui permet d'indiquer explicitement la nature des données transportées au sein de la connexion MPTCP, et notamment d'indiquer explicitement que les données acheminées sont des datagrammes UDP. Ainsi, une fonction mandataire (*proxy*) MPTCP transforme un datagramme UDP en un paquet TCP en procédant comme suit :
- remplacement de l'en-tête UDP par un en-tête TCP, et
- insertion d'une option TCP dont le champ « Protocol » est valorisé à « 17 », ce qui indique que le contenu du paquet TCP correspond à des données UDP.

Suite à la réception d'un paquet TCP qui contient ladite option TCP, la fonction mandataire MPTCP procède comme suit :
- remplacement de l'en-tête TCP par un en-tête UDP, et
- transfert du datagramme UDP ainsi construit vers le prochain saut.

Cette solution permet avantageusement d'utiliser les mêmes fonctions pour établir des communications à chemins multiples à la fois pour le trafic TCP et pour le trafic UDP.

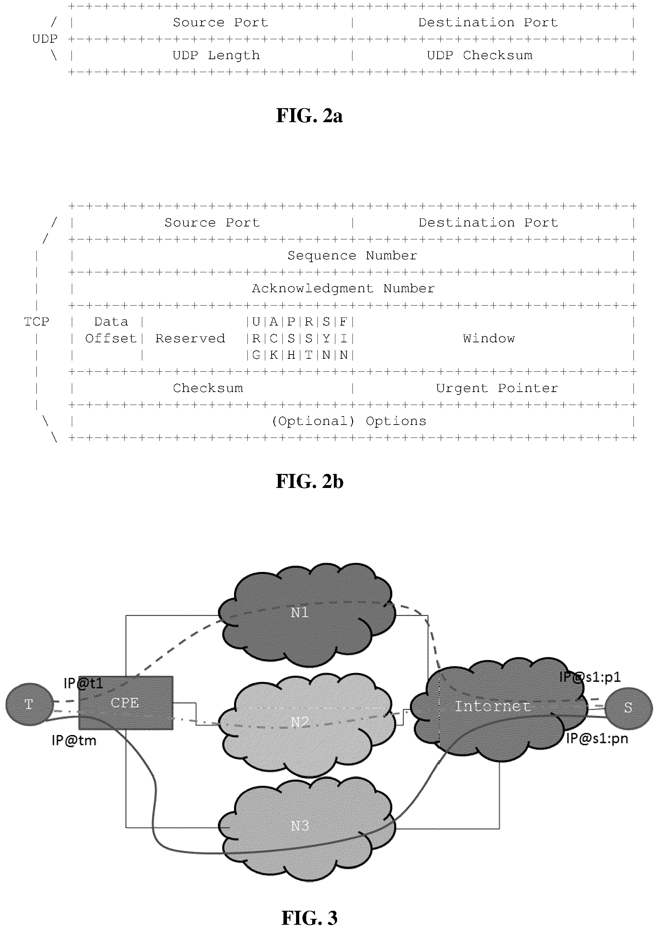

L'inconvénient de cette solution est qu'elle offre des performances dégradées en raison de la différence de taille entre l'en-tête TCP (20 octets sans compter les options, cf. **figure 2a**) et l'en-tête UDP (8 octets, cf. **figure 2b**). En particulier, cette différence de taille peut provoquer la fragmentation des datagrammes UDP. Cette fragmentation oblige les opérateurs réseau à modifier certains paramètres tels que la valeur de la MTU (initiales des mots anglais « *Maximum Transfer Unit* »), qui correspond à la taille maximale des paquets pouvant être transmis sur un lien donné : si la taille d'un paquet excède la valeur de la MTU, alors la source émettrice du paquet est informée de cet excès et est invitée à fragmenter ledit paquet de taille supérieure à la valeur MTU. Or la modification de tels paramètres n'est pas toujours possible dans certains contextes, par exemple en raison de limitations technologiques. De plus, le transport fiable de données caractéristique du protocole TCP peut induire une dégradation de service pour des applications UDP.

Le document US2013/064198 décrit un système où des liaisons sans fil peuvent être utilisées simultanément pour un débit accru en permettant la sélection entre l'agrégation simultanée et des modes de fonctionnement robustes.

La présente invention concerne donc un procédé selon la revendication 1, un dispositif correspondant selon la revendication 5, un moyen de stockage selon la revendication 11 et un programme d'ordinateur téléchargeable selon la revendication 12. Le procédé de communication dans un réseau IP comprend les étapes suivantes :
a) un premier dispositif communicant initialise une communication avec un second dispositif communicant, en signalant audit second dispositif communicant que ledit premier dispositif communicant est compatible avec les communications à chemins multiples reposant sur le protocole de transport UDP (User Datagram Protocol), et
b) si le second dispositif communicant est lui aussi compatible avec les communications UDP à chemins multiples :
   - le premier dispositif communicant envoie des données au second dispositif selon le protocole de transport UDP, en incluant dans les messages contenant ces données, quel que soit le chemin utilisé, un même identifiant, dit identifiant de contexte, permettant au second dispositif communicant de corréler l'ensemble des datagrammes UDP associés à une même communication UDP à chemins multiples, et/ou
   - le second dispositif communicant envoie des données au premier dispositif selon le protocole de transport UDP, en incluant dans les messages contenant ces données, quel que soit le chemin utilisé, un même identifiant, dit identifiant de contexte, permettant au premier dispositif communicant de corréler l'ensemble des datagrammes UDP associés à une même communication UDP à chemins multiples.

En effet, les auteurs de la présente invention ont réalisé que les datagrammes UDP envoyés par un dispositif communicant émetteur à un dispositif communicant récepteur, en utilisant différentes adresses IP source ou différents numéros de port source, doivent être identifiés de manière adéquate si l'on veut permettre au dispositif communicant récepteur de corréler l'ensemble des datagrammes UDP associés à une même communication UDP à chemins multiples. Une telle identification permet en effet de préserver l'intégrité de l'échange des données entre les deux dispositifs. Selon la présente invention, le dispositif communicant émetteur insère dans les datagrammes UDP qu'il émet un identifiant de contexte, que l'on appellera « Context_ID » ; une telle communication UDP à chemins multiples sera appelée « MPUDP ».

On notera que, contrairement aux solutions existantes qui reposent sur l'exploitation de champs spécifiques d'un en-tête d'encapsulation (par exemple, IP-in-IP, ou GRE), ou des solutions spécifiques au protocole TCP (par exemple, MPTCP), ou encore des solutions qui transportent des données UDP dans un paquet TCP (telle que la solution de Boucadair *et al.* décrite succinctement ci-dessus), la présente invention repose sur l'acheminement natif de datagrammes UDP.

Grâce à ces dispositions, on obtient une parité fonctionnelle entre TCP et UDP pour la gestion de chemins multiples, en établissant des sessions UDP *via* des chemins multiples de façon comparable à l'établissement de connexions TCP *via* des chemins multiples, afin de traiter avec la même efficacité l'ensemble du trafic acheminé sur Internet et reposant indifféremment sur le protocole TCP ou sur le protocole UDP.

De plus, avantageusement, l'invention :
- n'impose aucune modification aux applications logicielles reposant sur UDP ;
- permet, pour bénéficier des avantages de l'agrégation de liens, d'éviter l'utilisation de tunnels (comme dans les technologies « GTP bonding » ou « GRE bonding » par exemple), dont l'ingénierie, l'établissement et la maintenance sont sources de complication et de nature à pénaliser le niveau de qualité associé aux communications reposant sur de tels tunnels ;
- permet d'optimiser l'utilisation des ressources réseaux disponibles sans aucun coût protocolaire, et sans rupture protocolaire consistant par exemple à transformer des datagrammes UDP en des paquets transportés au moyen d'autres protocoles de transport (par exemple, TCP) ; et
- permet de déployer une seule solution pour toutes les applications logicielles transportées au moyen du protocole UDP, contrairement aux solutions qui nécessitent l'intégration de la logique d'agrégation dans l'application elle-même.

On améliore ainsi significativement la qualité d'expérience utilisateur.

Un exemple typique d'application de l'invention est le transfert de fichiers utilisant les ressources du protocole TFTP (Trivial File Transfer Protocol), ou encore la gestion optimisée de flux de collecte de statistiques reposant sur le protocole SNMP (initiales des mots anglais « *Simple Network Management Protocol*»), qui utilise les ports UDP 161 et 162. Un terminal disposant de plusieurs attachements réseau agissant en tant que client TFTP pourra dynamiquement exploiter l'ensemble des chemins disponibles qui lui permettent d'accéder au serveur TFTP. Le temps de transfert des données sera ainsi amélioré au profit d'une expérience client optimisée. Dans le cas du trafic SNMP, l'invention permet en particulier de fiabiliser l'acheminement du trafic en permettant d'utiliser un chemin de repli en cas d'indisponibilité du chemin primaire.

On notera que les dispositifs communicants impliqués dans une communication selon l'invention peuvent être n'importe quels dispositifs compatibles avec le protocole IP. Un tel dispositif communicant peut être de type quelconque, par exemple un dispositif-client, ou un serveur de contenu accessible sur l'Internet, ou encore un concentrateur de trafic (on rappelle qu'un « concentrateur de trafic » est une fonction réseau, physique ou virtuelle, permettant d'agréger les communications exploitant les différents chemins susceptibles d'être utilisés par un dispositif donné pour établir une communication avec un dispositif distant). Il peut disposer d'une ou plusieurs adresses IP affectées à chacune de ses interfaces physiques ou logiques. Il peut aussi ne disposer que d'une seule interface, auquel cas on supposera qu'il est situé derrière un dispositif-relais (tel qu'un routeur ou une passerelle résidentielle) connecté à un ou plusieurs réseaux et compatible avec un mécanisme d'agrégation de liens.

Selon des caractéristiques particulières, le premier dispositif communicant et/ou le second dispositif communicant insère en outre dans lesdits messages un jeton de sécurité permettant au récepteur de ces messages d'en authentifier l'émetteur.

Grâce à ces dispositions, on peut éviter, par exemple, qu'un terminal tiers n'insère des données dans un message à destination d'un terminal T1 ou d'un terminal T2, alors qu'il ne fait pas légitimement partie d'un échange en cours entre le terminal T1 et le terminal T2.

Selon d'autres caractéristiques particulières, le premier dispositif communicant et/ou le second dispositif communicant insère en outre dans lesdits messages une information permettant au récepteur de ces messages de les traiter dans leur ordre d'émission.

Grâce à ces dispositions, on corrige un décalage éventuel entre l'ordre d'émission et l'ordre d'arrivée des datagrammes UDP, décalage qui peut être provoqué notamment par une distorsion du niveau de qualité relatif aux différents chemins utilisés.

Selon encore d'autres caractéristiques particulières, ledit procédé comprend les étapes suivantes :
- un premier dispositif communicant, compatible avec les communications UDP à chemins multiples, émet un message UDP, qui est intercepté par un relais embarqué dans ce premier dispositif communicant,
- ledit relais émet vers un second dispositif communicant un message d'établissement de session selon le protocole de transport TCP (Transmission Control Protocol) contenant une option dédiée apte à signaler audit second dispositif communicant que le premier dispositif communicant est compatible avec les communications UDP à chemins multiples, et
- si le second dispositif communicant est lui aussi compatible avec les communications UDP à chemins multiples, il émet un message de réponse selon le protocole de transport TCP dans lequel il insère ladite option dédiée, puis le premier dispositif communicant envoie des données au second dispositif communicant et/ou le second dispositif communicant envoie des données au premier dispositif communicant, en utilisant une communication UDP à chemins multiples.

Grâce à ces dispositions, on assure, grâce au protocole TCP ou MPTCP, la fiabilité des échanges de données (incluant par exemple l'échange d'adresses IP, de numéros de port, ou de jetons de sécurité) permettant l'établissement de communications UDP à chemins multiples.

Corrélativement, l'invention concerne un dispositif communicant, dit premier dispositif communicant. Ledit dispositif communicant est remarquable en ce qu'il comprend des moyens pour :
- initialiser une communication avec un autre dispositif communicant, dit second dispositif communicant, au sein d'un réseau IP, en signalant audit second dispositif communicant que ledit premier dispositif communicant est compatible avec les communications UDP (User Datagram Protocol) à chemins multiples,
- envoyer des données selon le protocole UDP au second dispositif communicant, en incluant dans les messages contenant ces données, quel que soit le chemin utilisé, un même identifiant, dit identifiant de contexte, permettant au second dispositif communicant de corréler l'ensemble des datagrammes UDP associés à une même communication UDP à chemins multiples, et
- recevoir des données selon le protocole UDP de la part du second dispositif communicant, en détectant dans les messages contenant ces données, quel que soit le chemin utilisé, un même identifiant, dit identifiant de contexte, permettant au premier dispositif communicant de corréler l'ensemble des datagrammes UDP associés à une même communication UDP à chemins multiples.

Selon des caractéristiques particulières, ledit dispositif communicant comprend en outre des moyens pour insérer dans les messages qu'il émet un jeton de sécurité permettant au récepteur de ces messages d'en authentifier l'émetteur.

Selon d'autres caractéristiques particulières, ledit dispositif communicant comprend en outre des moyens pour insérer dans les messages qu'il émet une information permettant au récepteur de ces messages de les traiter dans leur ordre d'émission.

Selon encore d'autres caractéristiques particulières, ledit dispositif communicant embarque un relais comprenant des moyens pour émettre à destination d'un second dispositif communicant un message d'établissement de session selon le protocole de transport TCP (Transmission Control Protocol) contenant une option dédiée apte à signaler audit second dispositif communicant que le premier dispositif communicant est compatible avec les communications UDP à chemins multiples.

Inversement, selon encore d'autres caractéristiques particulières, ledit dispositif communicant comprend en outre des moyens pour :
- prendre en compte, dans un message d'établissement de session selon le protocole de transport TCP (Transmission Control Protocol) reçu de la part d'un autre dispositif communicant, dit troisième dispositif communicant, une option dédiée apte à signaler audit premier dispositif communicant que ledit troisième dispositif communicant est compatible avec les communications UDP à chemins multiples,
- émettre un message de réponse selon le protocole de transport TCP contenant ladite option dédiée, et
- envoyer des données au troisième dispositif communicant et/ou recevoir des données émises par le troisième dispositif communicant, en utilisant une communication UDP à chemins multiples.

Les avantages offerts par ces dispositifs communicants sont essentiellement les mêmes que ceux offerts par les procédés de communication succinctement exposés ci-dessus.

On notera qu'il est possible de réaliser ces dispositifs communicants dans le contexte d'instructions logicielles et/ou dans le contexte de circuits électroniques.

L'invention vise également un programme d'ordinateur téléchargeable depuis un réseau de communications et/ou stocké sur un support lisible par ordinateur et/ou exécutable par un microprocesseur. Ce programme d'ordinateur est remarquable en ce qu'il comprend des instructions pour l'exécution des étapes d'un des procédés de communication succinctement exposés ci-dessus, lorsqu'il est exécuté sur un ordinateur.

Les avantages offerts par ce programme d'ordinateur, sont essentiellement les mêmes que ceux offerts par les procédés de communication succinctement exposés ci-dessus.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1a, mentionnée ci-dessus, représente un terminal T communicant avec un serveur S via plusieurs réseaux IP en mettant en œuvre un protocole de communication à chemins multiples,
- la figure 1b, mentionnée ci-dessus, représente un terminal T placé derrière un dispositif-relais R communicant avec un serveur S via plusieurs réseaux IP en mettant en œuvre un protocole de communication à chemins multiples,
- la figure 2a, mentionnée ci-dessus, représente l'en-tête UDP,
- la figure 2b, mentionnée ci-dessus, représente l'en-tête TCP,
- la figure 3 représente un terminal T compatible avec les communications à chemins multiples connecté à un serveur S lui aussi compatible avec les communications à chemins multiples,
- la figure 4 illustre une communication MPUDP entre un terminal T et un serveur S utilisant un identifiant de contexte selon l'invention,
- la figure 5 illustre une communication MPUDP entre un terminal T1 et un terminal T2 utilisant un identifiant de contexte et un jeton de sécurité selon l'invention,
- la figure 6 représente un datagramme UDP contenant des données utiles, ainsi qu'un identifiant de contexte et des données supplémentaires selon l'invention,
- la figure 7 représente un agrégat de sous-sessions TCP formant une unique connexion MPTCP,
- la figure 8 représente l'option MPTCP « Fallback_UD_Capable » selon l'invention,
- la figure 9 représente l'option TCP « Fallback_UDP_Capable » selon l'invention,
- la figure 10 illustre une communication selon l'invention entre un terminal T et un serveur S,
- la figure 11 illustre l'émission selon l'invention de datagrammes UDP par un serveur S à destination d'un terminal T, *via* un concentrateur de trafic C et une passerelle résidentielle CPE, et
- la figure 12 illustre l'émission selon l'invention de datagrammes UDP par un terminal T à destination d'un serveur S, *via* une passerelle résidentielle CPE et un concentrateur de trafic C.

On rappelle pour commencer qu'une communication UDP simple est identifiée par l'ensemble de paramètres suivant : adresse IP source, numéro de port source, adresse IP destination, et numéro de port destination. Une communication UDP à chemins multiples est, de manière générale, une communication associée à plusieurs ensembles de paramètres {adresse IP source, numéro de port source, adresse IP destination, numéro de port destination} ; la variation d'au moins l'un de ces quatre paramètres identifie un chemin différent (communication simple différente). Ainsi, une communication UDP à chemins multiples est composée de plusieurs communications UDP simples.

La **figure 3** représente, à titre d'exemple, un terminal T compatible avec les communications à chemins multiples, connecté, *via* une passerelle résidentielle CPE (initiales des mots anglais « *Customer Premises Equipment* »), trois réseaux d'accès N1, N2 et N3 (filaires ou sans-fil) et l'Internet, à un serveur S lui aussi compatible avec les communications à chemins multiples. Le terminal T utilise m adresses IP distinctes (notées IP@t*i*, où *i* = 1, ...,m), alors que le serveur S utilise une même adresse IP (notée IP@s1) mais *n* numéros de port distincts (notés p*j*, où *j* = 1, ... *n*).

Comme mentionné ci-dessus, selon la présente invention, un premier dispositif communicant insère, dans les paquets IP envoyés selon un mode de transport UDP à un second dispositif communicant, un identifiant de contexte appelé « Context_ID ». L'identifiant de contexte doit être unique pour chaque communication MPUDP établie entre deux dispositifs communicants. Un dispositif communicant peut cependant réutiliser un identifiant de contexte qui aurait été utilisé dans le cadre d'une communication précédente, mais désormais terminée, s'il n'y a pas de risque de collision avec l'identifiant de contexte d'une communication en cours. De plus, afin d'améliorer le niveau de sécurité des communications UDP à chemins multiples, il est préférable que l'identifiant de contexte soit généré aléatoirement.

On notera qu'un identifiant de contexte peut être choisi par le dispositif communicant récepteur, ou être le résultat de l'association d'un identifiant choisi par le dispositif communicant émetteur avec un autre identifiant choisi par le dispositif communicant récepteur ; ces variantes ne sont possibles que si une étape d'échange d'informations entre les deux dispositifs a été établie avant l'envoi effectif des datagrammes UDP *via* des chemins multiples. L'identifiant de contexte peut également être choisi par une autre entité, telle qu'un gestionnaire de réseau qui commande le dispositif communicant émetteur, ou le dispositif communicant récepteur, ou les deux dispositifs.

On notera également que, si la communication est bidirectionnelle, des identifiants de contexte distincts peuvent être utilisés par chacun des deux dispositifs communicants.

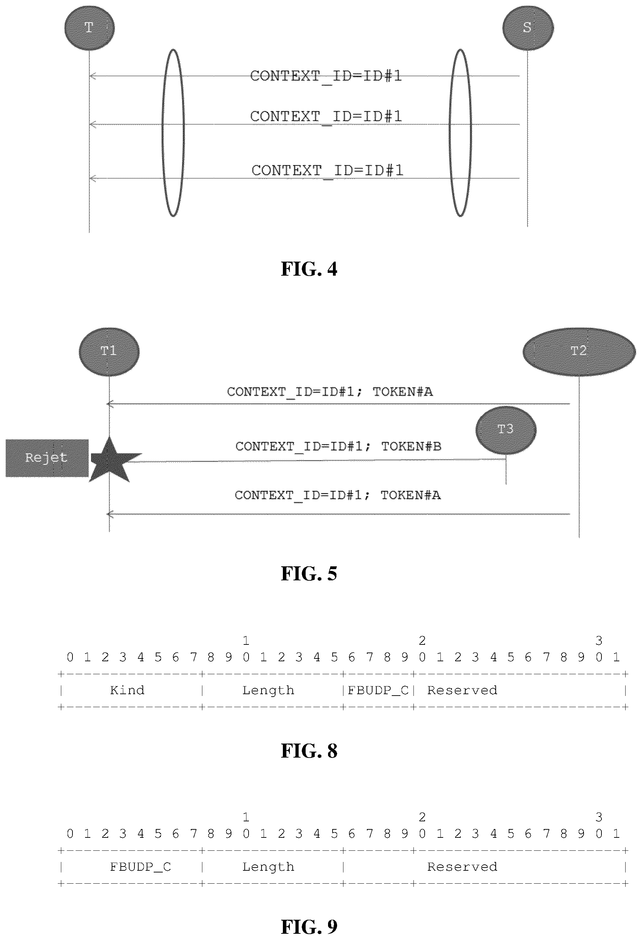

La **figure 4** illustre une communication MPUDP entre un terminal T et un serveur S. Dans cet exemple, les datagrammes UDP sont envoyés en utilisant trois communications UDP simples. Pour permettre au terminal T d'associer ces communications simples à une même session UDP à chemins multiples, le serveur S insère l'identifiant de contexte ID#1 dans les paquets qu'il envoie à T.

En plus de l'identifiant de contexte, des informations supplémentaires, telles qu'un jeton de sécurité, peuvent être avantageusement insérées dans les messages échangés entre les deux dispositifs communicants. La **figure 5** illustre une communication MPUDP entre un terminal T1 et un terminal T2 utilisant l'identifiant de contexte ID#1, et dans laquelle un terminal T3 essaye d'insérer des données (par exemple, en usurpant une adresse IP de T2). Si le jeton de sécurité « Authentication_Token » inclus par T3 n'est pas identique à celui utilisé par T2, alors T1 ne prend pas en compte les données transmises par T3.

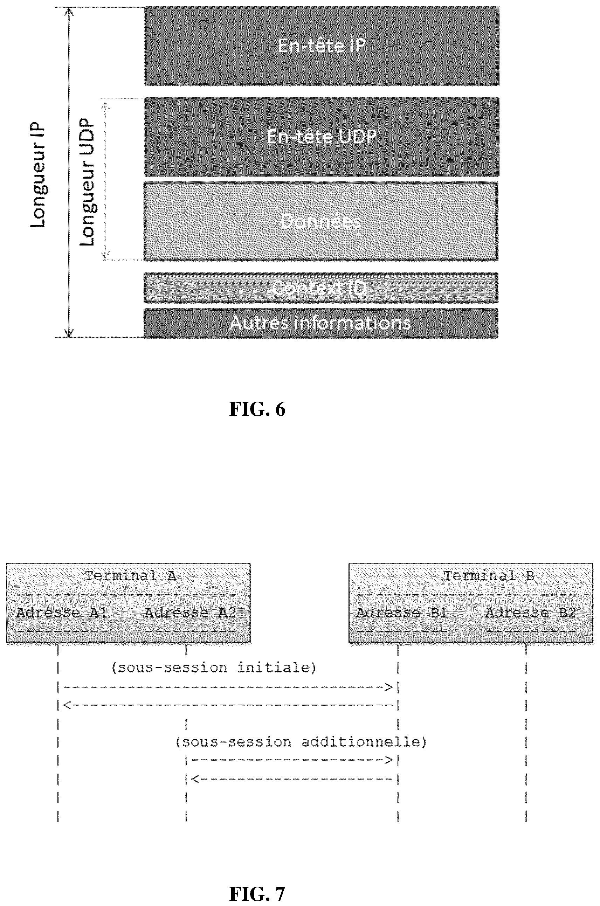

L'identifiant de contexte ainsi que des données supplémentaires peuvent être insérées dans un paquet IP, et sont, selon une première variante, positionnées immédiatement après les données UDP. Comme illustré sur la **figure 6****,** la valeur « Longueur IP » indique la taille globale du paquet IP incluant celle de l'en-tête IP (20 octets en IPv4, 40 octets en IPv6), alors que la valeur « Longueur UDP » indique la taille totale de l'en-tête UDP et des données utiles (« *payload* » en anglais). En soustrayant la longueur de l'en-tête IP et la Longueur UDP de la Longueur IP, le récepteur du paquet IP peut déterminer la position de l'identifiant de contexte et des éventuelles données supplémentaires.

Selon une deuxième variante, l'identifiant de contexte est transporté dans le champ contenant les données utiles (« *payload* ») UDP.

Selon une troisième variante, on définit de nouvelles options IPv4 dédiées (auquel cas les données supplémentaires peuvent être commodément consignées dans le champ « Options » de l'en-tête d'un paquet IPv4), ou un en-tête d'extension IPv6 dédié. Ces options sont utilisées pour transporter l'identifiant de contexte ainsi que d'éventuelles données supplémentaires (par exemple, un jeton de sécurité).

Il importe évidemment que l'utilisation de communications UDP à chemins multiples n'induise pas de dégradation de la Qualité de Service (par exemple, une perte de paquets) par comparaison avec le mode UDP classique.

En particulier, une distorsion du niveau de qualité associé aux chemins multiples est de nature à remettre en cause l'intégrité de la communication en provoquant un décalage entre l'ordre d'émission et l'ordre d'arrivée des datagrammes UDP. Même si certaines applications UDP sont conçues pour minimiser un tel risque (qui est également avéré pour des communications simples), un dispositif communicant UDP émetteur peut avantageusement insérer dans les messages qu'il émet, en plus de l'identifiant de contexte Context_ID, une information supplémentaire permettant à un dispositif communicant UDP récepteur de traiter ces messages dans leur ordre d'émission. Cette information supplémentaire sera appelée « Order_Rank ». Cet élément d'information peut être par exemple structuré comme un entier non-nul dont la valeur est incrémentée ; ainsi, un datagramme UDP dont la valeur Order_Rank est égale à « 7 » est une indication que ce datagramme UDP est le septième d'une séquence.

Afin d'améliorer la sécurité des communications, la valeur Order_Rank initiale (c'est-à-dire, celle du premier paquet) peut être non-nulle et générée aléatoirement.

Un terminal compatible avec les communications UDP à chemins multiples doit, de préférence, disposer de mécanismes fiables lui permettant de s'assurer que le terminal distant est lui aussi compatible avec les communications à chemins multiples. Plusieurs méthodes peuvent être envisagées à cet effet, par exemple :
- utiliser la ressource DNS SRV (initiales des mots anglais « *Domain Name System Service Record* ») : cette approche ne s'applique que pour des applications impliquant un échange DNS ; elle ne s'applique pas aux applications (telles que les applications P2P) échangeant des informations de connectivité dites référentes (« *referrals* », en anglais) (une information référente peut être structurée par exemple comme un nom de domaine, une adresse IP, ou un numéro de port, cf. https://tools.ietf.org/html/draft-carpenter-behave-referral-obiect-00#section-4) ;
- utiliser un nouveau numéro de protocole pour identifier la version UDP à chemins multiples : cette approche peut être envisagée dans un environnement contrôlé, mais ne peut pas être déployée à grande échelle à cause de la prolifération de NAT (initiales des mots anglais « *Network Address Translator* » signifiant « Traducteur d'Adresse Réseau ») et de pare-feux ;
- définir des extensions applicatives (FTP, par exemple) : cette approche ne s'applique qu'à certains protocoles, et ne peut pas être généralisée ; ou
- définir une nouvelle application au-dessus d'UDP ; cette application sera dédiée en partie à la vérification du support de MPUDP par le terminal distant.

On va décrire à présent un mode de réalisation de l'invention, qui combine avantageusement les protocoles de transport UDP et TCP.

On rappelle que le protocole TCP (défini notamment dans le document RFC 793) est l'un des protocoles principaux utilisés par les terminaux connectés à un réseau IP (par exemple, Internet), de sorte que la littérature évoque souvent la suite de protocoles « TCP/IP ». Le protocole TCP permet d'acheminer de manière fiable, ordonnée et sans erreurs un flux de données numériques entre des applications exécutées sur des terminaux connectés à un réseau local (par exemple, Intranet) ou à l'Internet. Le protocole TCP fonctionne au niveau de la couche transport du modèle OSI. Les navigateurs Web utilisent le protocole TCP lorsqu'ils se connectent à des serveurs distants ; le protocole TCP est aussi utilisé pour acheminer du courrier électronique ou pour transférer des fichiers d'un endroit à un autre. Des protocoles comme HTTP, HTTPS, SMTP, POP3, IMAP, SSH, FTP, Telnet, ainsi que de nombreux autres protocoles sont transportés sur des connexions TCP. Une connexion TCP est identifiée par l'adresse et le numéro de port du terminal source, ainsi que par l'adresse et le numéro de port du terminal de destination.

Le présent mode de réalisation repose sur l'utilisation d'options TCP ou d'options IPv4 pour établir des communications UDP *via* des chemins multiples. A cet effet, on peut utiliser le champ « Options » (décrit dans le document RFC 791 de l'IETF) de l'en-tête d'un paquet IPv4.

Classiquement, deux terminaux peuvent insérer des « options TCP » dans les messages TCP échangés entre eux, afin, par exemple, d'optimiser la qualité de la connexion TCP. De telles options occupent l'espace disponible en fin d'en-tête TCP, et ont une longueur (« *length* » en anglais) exprimée en octets. Le type (« *kind* » en anglais) d'option est un identifiant unique descriptif de la nature de l'option TCP. Par exemple, la valeur « 0 » indique la fin de la liste des options, et la valeur « 2 » indique la taille maximum du segment TCP (« *Maximum Segment Size* », ou MSS en anglais).

Le terme « option » est également utilisé pour désigner, par exemple, un en-tête d'extension (« *Extension Header* » en anglais) IPv6, une option IPv4, le ou les champs « adresse source/numéro de port source » d'un paquet encapsulé, le ou les champs « adresse de destination/numéro de port de destination » d'un paquet encapsulé, un ou plusieurs champs d'un paquet encapsulé, un ou plusieurs champs d'un paquet qui encapsule un autre paquet, ou une extension d'un schéma d'encapsulation, aussi bien qu'une option du protocole TCP ou d'un autre protocole de transport, ou bien encore une combinaison de ces différents moyens.

L'avènement des terminaux MIF introduit la possibilité d'exploiter les ressources de plusieurs chemins via les réseaux disponibles pour établir une connexion TCP, en utilisant tout ou partie des adresses IP allouées aux différentes interfaces des terminaux MIF. Toutefois, cette possibilité introduit une complexité caractéristique du mode de fonctionnement du protocole TCP : étant donné que les connexions TCP sont associées à une adresse IP et un numéro de port, toute modification d'au moins l'une de ces informations est de nature à pénaliser le fonctionnement de la connexion TCP en cours, et, partant, le service utilisant ladite connexion TCP. Ce changement est particulièrement préjudiciable lorsque le terminal se voit attribuer une nouvelle adresse IP, ou lorsque le terminal se connecte à un autre réseau, ou encore lorsque l'interface à laquelle l'adresse IP est associée n'est plus disponible. Par exemple, des moyens pour informer un correspondant TCP distant qu'une adresse IP n'est plus valide sont alors nécessaires pour assurer le maintien d'une connexion TCP existante sans interrompre les services offerts par cette connexion TCP.

Le groupe de travail « mptcp » de l'IETF a été missionné en 2009 pour spécifier des extensions du protocole TCP capables de s'accommoder des contraintes imposées par la possibilité d'affecter plusieurs adresses IP aux différentes interfaces logiques ou physiques d'un terminal. Ce groupe de travail a publié les premières spécifications du protocole MPTCP (cf. A. Ford, C. Raiciu et M. Handley, « TCP Extensions for Multipath Operation with Multiple Addresses », RFC 6824, janvier 2013) - que certains téléphones « intelligents » et certains systèmes d'exploitation sont d'ailleurs déjà capables de mettre en œuvre. Le protocole MPTCP répond en particulier au besoin d'assurer une continuité de session IP en cas de mobilité du terminal. L'IETF envisage de faire progresser le statut des spécifications MPTCP actuelles, pour en faire de véritables normes au sens de l'IETF.

Le protocole MPTCP a donc été proposé pour minimiser les risques de rupture intempestive d'une connexion TCP, liés par exemple à de telles modifications d'adressage, et plus généralement pour répondre aux exigences posées par un contexte où un terminal a la capacité de se raccorder à un ou plusieurs réseaux via une ou plusieurs interfaces. En outre, il est prévu dans le document RFC 6824 qu'en cas d'échec d'une tentative d'établissement d'une connexion MPTCP, la communication bascule automatiquement sur une connexion TCP simple.

Le présent mode de réalisation s'applique de manière générale à tout protocole de la suite TCP/IP régissant des communications à chemins multiples. A des fins purement illustratives, on va décrire ci-dessous l'application de l'invention au protocole MPTCP, après quelques rappels sur certaines propriétés de ce protocole.

Selon le protocole MPTCP, on appelle « sous-session » (« *sub-flow* » en anglais) une connexion TCP reposant sur l'utilisation de l'un des couples (adresse IP, numéro de port) disponibles. De ce fait, une connexion MPTCP est un agrégat de sous-sessions TCP. A titre d'exemple, la figure 7 montre une connexion MPTCP entre un terminal A et un terminal B ; la sous-session initiale est établie entre l'adresse A1 du terminal A et l'adresse B1 du terminal B ; ultérieurement, une sous-session additionnelle est établie entre l'adresse A2 du terminal A et l'adresse B1 du terminal B. Un terminal MIF peut ainsi se connecter à de nouveaux réseaux, ou se déconnecter de certains réseaux, tout en maintenant une même connexion à chemins multiples.

Différents cas d'usage peuvent être envisagés pour le protocole MPTCP, tels que :
- échanger des données entre plusieurs réseaux d'accès sans-fil,
- réduire la charge d'un réseau mobile, en basculant une partie du trafic vers un réseau d'accès sans-fil,
- optimiser l'utilisation des ressources réseau en exploitant de manière simultanée les ressources de plusieurs liens d'accès et en répartissant la charge de trafic d'une ou plusieurs connexions MPTCP sur ces différents liens, ce qui permet d'augmenter significativement la bande passante associée à l'établissement d'une connexion MPTCP, ou
- fiabiliser une connexion MPTCP en basculant le trafic acheminé le long d'un chemin primaire vers un chemin de secours en cas de rupture du chemin primaire, et ce, de manière transparente pour l'utilisateur (c'est-à-dire sans interruption de service).

Une connexion MPTCP est initialisée comme n'importe quelle connexion TCP classique, à l'exception du fait qu'une option TCP appelée MP_CAPABLE (signifiant que le terminal émetteur est compatible avec les extensions MPTCP) est incluse dans le message contenant le drapeau d'initialisation de sous-session (SYN) et dans les messages ultérieurs. Un terminal MPTCP peut signaler au terminal distant la disponibilité d'une adresse IP supplémentaire à l'aide d'une option TCP appelée ADD_ADDR, sans nécessairement créer de sous-session associée.

La signalisation de plusieurs adresses IP disponibles et susceptibles d'être utilisées pour communiquer avec un correspondant peut conduire à l'échec de l'établissement de certaines sous-sessions TCP, parce que les adresses IP externes telles que perçues par les terminaux distants peuvent ne pas être les mêmes que celles visibles localement. Pour cette raison, l'option ADD_ADDR du protocole MPTCP comprend un identificateur d'adresse, appelé « Address ID », utilisé pour identifier sans ambiguïté une adresse IP disponible. Cette disposition est censée éviter les problèmes induits par la présence d'un NAT sur le chemin suivi par les paquets entre les deux terminaux qui ont établi une connexion MPTCP. L'option ADD_ADDR est également utilisée pour transmettre un numéro de port dans le cas où l'un des terminaux MPTCP n'utilise pas le même numéro de port pour l'ensemble des adresses IP disponibles.

De même, le protocole MPTCP prévoit des dispositions qui sont censées permettre, notamment, la traversée de pare-feux (« *firewall* » en anglais). Plus précisément, la spécification du protocole MPTCP stipule que les numéros de séquence tels qu'indiqués dans l'en-tête TCP sont spécifiques à chaque sous-session, tandis que le numéro de séquence indiqué dans l'option DSS (« *Data Sequence Signal* ») du protocole MPTCP sert à associer ces sous-sessions à la même connexion MPTCP.

Le protocole MPTCP entend ainsi s'affranchir des contraintes imposées par la prolifération massive de « *middle boxes* » (fonctions intermédiaires dans une chaîne de communication), comme les NAT et les pare-feux déployés dans les réseaux actuels.

Le protocole MPTCP utilise notamment les options TCP suivantes :
- MP_CAPABLE : cette option, mentionnée ci-dessus, est utilisée pour signaler au terminal distant que le terminal émetteur est compatible avec les options MPTCP ;
- ADD_ADDR : cette option, mentionnée ci-dessus, est utilisée pour ajouter une nouvelle adresse ; elle comprend un champ optionnel de deux octets permettant de fournir également un numéro de port, le cas échéant ;
- REMOVE_ADDR : cette option est utilisée pour supprimer une adresse ;
- MP_PRIO: cette option est utilisée pour modifier la priorité d'une connexion TCP ;
- MP_JOIN : cette option est utilisée pour identifier la connexion TCP qui est associée à l'établissement d'une nouvelle sous-session ;
- MP_FAIL: cette option est utilisée pour revenir au mode TCP sans options MPTCP ; et
- MP_FASTCLOSE : cette option est utilisée pour clôturer rapidement une connexion MPTCP.

Le protocole MPTCP peut être activé selon plusieurs modes :
- *mode natif :* deux terminaux MPTCP établissent toutes les sous-sessions qui correspondent aux numéros des adresses/ports disponibles, et utilisent l'ensemble de ces sous-sessions ;
- *mode primaire* : deux terminaux MPTCP signalent des sous-sessions, mais seul un sous-ensemble de ces sous-sessions est effectivement utilisé pour le transfert de données ;
- *mode secondaire* : en cas d'indisponibilité (ou de surcharge) du sous-ensemble « primaire » de sous-sessions, un sous-ensemble « secondaire » de sous-sessions est alors sollicité pour assurer la continuité de la connexion MPTCP ; et
- *mode repli* : deux terminaux MPTCP utilisent une sous-session unique ; en cas de panne, le trafic est basculé vers une nouvelle sous-session créée à cet effet.

Pour être compatible avec le présent mode de réalisation, un dispositif communicant doit embarquer un dispositif relais, que l'on appellera « relais UDP/TCP », chargé de relayer vers une connexion TCP ou MPTCP les messages UDP émis par une application logicielle associée au dispositif communicant. On notera que, du point de vue de la performance applicative, l'utilisation d'une connexion MPTCP pour relayer les messages UDP est plus efficace qu'une connexion TCP simple ; de plus, MPTCP permet d'échanger les adresses multiples et/ou numéros de ports.

On va décrire à présent les étapes d'un procédé de communication entre deux dispositifs communicants, dont l'un au moins (appelons-le « premier dispositif communicant ») est compatible avec MPUDP. De plus, on suppose ici que les divers chemins utilisables pour cette communication sont compatibles avec MPTCP.

Lors d'une étape E1, ladite application logicielle associée audit premier dispositif communicant émet un message UDP, qui est intercepté par le relais UDP/TCP embarqué dans ce premier dispositif communicant.

Lors d'une étape E2, ce relais UDP/TCP émet à l'intention d'un second dispositif communicant un message SYN contenant une option dédiée, que l'on appellera « Fallback_UDP_Capable », et qui signale au second dispositif communicant que le premier dispositif communicant est compatible avec MPUDP.

Selon une première variante, cette option Fallback_UDP _Capable est une option MPTCP, telle que celle illustrée sur la **figure 8****.** Selon une deuxième variante, cette option Fallback_UDP _Capable est une option TCP, telle que celle illustrée sur la **figure 9** - auquel cas l'utilisation d'une signalisation MPTCP n'est pas obligatoire.

Lors d'une étape E3, le second dispositif communicant répond au moyen d'un message SYN/ACK. Deux cas sont alors possibles :
- si le second dispositif communicant a lui aussi la capacité d'établir une communication UDP *via* des chemins multiples, il insère l'option Fallback_UDP _Capable dans ledit message SYN/ACK ; les deux dispositifs communicants échangent alors des données, lors d'une étape E4, des données au moyen d'une communication MPUDP, sans solliciter dorénavant le relais UDP/TCP embarqué dans chacun de ces dispositifs communicants ; optionnellement, le relais peut inclure l'option Fallback_UDP _Capable dans le message ACK qu'il émet vers le second dispositif en réponse au message SYN/ACK ; l'inclusion de l'option dans le message ACK permet d'indiquer explicitement au second dispositif que le relais UDP/TCP a bien reçu l'option Fallback_UDP _Capable ;
- si, en revanche, le second dispositif communicant n'a pas la capacité d'établir une communication UDP *via* des chemins multiples, les deux dispositifs communicants échangent alors, lors d'une étape E'4, des données selon le mode de transport UDP (simple) classique, ou selon le mode TCP simple, ou selon le mode MPTCP, le mode choisi ici résultant d'une configuration préalable des dispositifs communicants.

Voici deux exemples de mise en œuvre de ce mode de réalisation.

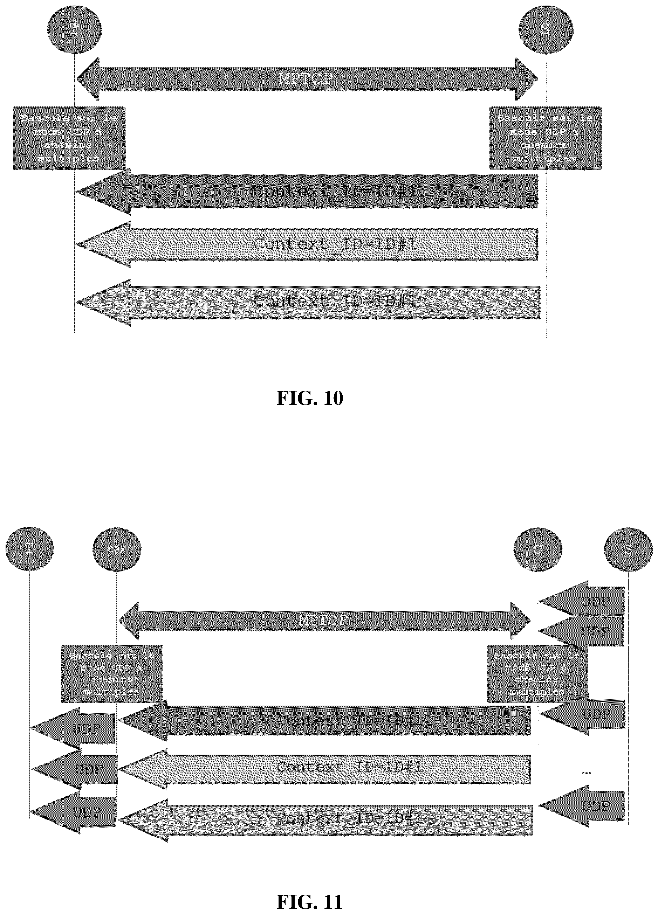

Selon un premier exemple, illustré sur la **figure 10****,** le premier dispositif communicant est un terminal T compatible avec MPTCP, abonné à un certain réseau, et le second dispositif communicant est un serveur de contenus S (ou un deuxième terminal), lui aussi compatible avec MPTCP, joignable *via* ce réseau. Concernant chacun de ces deux dispositifs communicants, l'interface entre l'application UDP et le relais UDP/TCP n'est pas illustrée sur la figure 10, seuls les échanges externes étant reproduits.

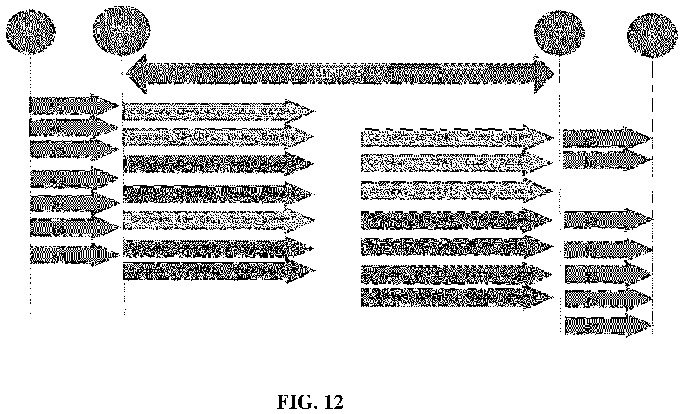

Selon un deuxième exemple de mise en œuvre, illustré sur les **figures 11** **et** **12****,** le premier dispositif communicant est une passerelle résidentielle CPE, compatible avec MPTCP, derrière laquelle se trouve un terminal T qui communique avec un serveur de contenus S (ou avec un deuxième terminal). Le second dispositif communicant est un concentrateur de trafic C compatible avec MPTCP, situé sur les chemins de communication entre la passerelle CPE et le serveur S. Comme dans l'exemple précédent, l'interface de chacun de ces dispositifs communicants entre l'application UDP et le relais UDP/TCP n'est pas illustrée sur les figures 11 et 12, seuls les échanges externes étant reproduits.

Dans le cas de la figure 11, suite à l'établissement de la communication comme décrit ci-dessus, les datagrammes UDP reçus du serveur S sont distribués par le concentrateur de trafic C entre les différents chemins disponibles et envoyés à la passerelle résidentielle CPE. Suite à la réception de ces datagrammes UDP par la passerelle résidentielle CPE, celle-ci les transmet au terminal T.

Dans le cas de la figure 12, suite à l'établissement de la communication comme décrit ci-dessus, les datagrammes UDP reçus du terminal T sont distribués par la passerelle résidentielle CPE entre deux chemins disponibles et envoyés au concentrateur de trafic C. Suite à la réception de ces datagrammes UDP par le concentrateur de trafic C, ce dernier les transmet au serveur S.

Dans le cas illustré sur la figure 12, la passerelle résidentielle CPE insère l'information Order_Rank décrite ci-dessus (en plus de l'identifiant de contexte Context_ID). Supposons par exemple que les datagrammes « 1 », « 2 » et « 5 » sont envoyés par la passerelle résidentielle CPE via le premier chemin, alors que les datagrammes « 3 », « 4 », « 6 » et « 7 » sont envoyés via le second chemin. Suite à la réception de ces différents paquets par le concentrateur de trafic C, ce dernier utilise l'information Order_Rank pour décider si un datagramme est à relayer immédiatement vers le serveur S, ou s'il doit attendre l'arrivée d'autres datagrammes avant de le transmettre. Afin d'éviter que la fonction de ré-ordonnancement n'induise un délai important, on peut prévoir que le concentrateur transmette les paquets mis en attente après l'écoulement d'une durée REORDER_MAX. Par exemple, si l'ordre d'arrivée des paquets via les deux chemins est {« 1 », « 2 », « 5 », « 3 », « 4 », « 6 », « 7 »}, le concentrateur de trafic C doit traiter d'abord les paquets « 1 » et « 2 » ; le paquet dont la valeur de l'information Order_Rank est égale à « 5 » est mis en attente jusqu'à réception des paquets « 3 » et « 4 » ; une fois ces paquets reçus, le concentrateur de trafic C transmet le datagramme « 5 ». En supposant que les paquets « 3 » et « 4 » ne sont pas reçus dans un délai REORDER_MAX, le paquet « 5 » est alors relayé vers sa destination sans attendre les paquets manquants.

On notera que, dans ce deuxième exemple de mise en œuvre (illustré sur les figures 11 et 12), le terminal T et le serveur S se comportent comme des dispositifs communicants UDP classiques ; par conséquent, il n'est pas nécessaire qu'ils soient compatibles avec les communications UDP à chemins multiples.

L'invention peut être mise en œuvre au sein de nœuds de réseaux de communication, par exemple des terminaux, serveurs, passerelles résidentielles ou concentrateurs de trafic, au moyen de composants logiciels et/ou matériels. Lesdits composants logiciels pourront être intégrés à un programme d'ordinateur classique de gestion de nœud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en œuvre de l'un quelconque des procédés de communication de la charge d'un concentrateur de trafic selon l'invention.

En effet, l'invention vise aussi un programme d'ordinateur tel que décrit succinctement ci-dessus. Ce programme d'ordinateur peut être stocké sur un support lisible par un ordinateur et peut être exécutable par un microprocesseur. Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations inamovible, ou partiellement ou totalement amovible, comportant des instructions d'un programme d'ordinateur tel que décrit succinctement ci-dessus.

Ce support d'informations peut être n'importe quelle entité ou dispositif capable de stocker le programme. Par exemple, le support d'informations peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau tel que l'Internet.

En variante, le support d'informations peut être un circuit intégré dans lequel le programme est incorporé, le circuit étant adapté pour exécuter ou pour être utilisé dans l'exécution de l'un quelconque des procédés de communication selon l'invention.

## Revendications

1. Procédé de communication dans un réseau IP, comprenant les étapes suivantes :
a) un premier dispositif communicant initialise une communication avec un second dispositif communicant, en signalant audit second dispositif communicant que ledit premier dispositif communicant est compatible avec les communications à chemins multiples reposant sur le protocole de transport UDP, User Datagram Protocol, et
b) si le second dispositif communicant est lui aussi compatible avec les communications UDP à chemins multiples :
- le premier dispositif communicant envoie des données au second dispositif selon le protocole de transport UDP, en incluant dans les messages contenant ces données, quel que soit le chemin utilisé, un même identifiant, dit identifiant de contexte (Context_ID), permettant au second dispositif communicant de corréler l'ensemble des datagrammes UDP associés à une même communication UDP à chemins multiples, et/ou
- le second dispositif communicant envoie des données au premier dispositif selon le protocole de transport UDP, en incluant dans les messages contenant ces données, quel que soit le chemin utilisé, un même identifiant, dit identifiant de contexte (Context_ID), permettant au premier dispositif communicant de corréler l'ensemble des datagrammes UDP associés à une même communication UDP à chemins multiples.

2. Procédé de communication selon la revendication 1, **caractérisé en ce que** le premier dispositif communicant et/ou le second dispositif communicant insère en outre dans lesdits messages un jeton de sécurité permettant au récepteur de ces messages d'en authentifier l'émetteur.

3. Procédé de communication selon la revendication 1 ou la revendication 2, **caractérisé en ce que** le premier dispositif communicant et/ou le second dispositif communicant insère en outre dans lesdits messages une information permettant au récepteur de ces messages de les traiter dans leur ordre d'émission.

4. Procédé de communication selon l'une quelconque des revendications 1 à 3, **caractérisé en ce qu'**il comprend les étapes suivantes :
- un premier dispositif communicant, compatible avec les communications UDP à chemins multiples, émet un message UDP, qui est intercepté par un relais embarqué dans ce premier dispositif communicant,
- ledit relais émet vers un second dispositif communicant un message d'établissement de session selon le protocole de transport TCP, Transmission Control Protocol, contenant une option dédiée apte à signaler audit second dispositif communicant que le premier dispositif communicant est compatible avec les communications UDP à chemins multiples, et
- si le second dispositif communicant est lui aussi compatible avec les communications UDP à chemins multiples, il émet un message de réponse selon le protocole de transport TCP dans lequel il insère ladite option dédiée, puis le premier dispositif communicant envoie des données au second dispositif communicant et/ou le second dispositif communicant envoie des données au premier dispositif communicant, en utilisant une communication UDP à chemins multiples.

5. Dispositif communicant, dit premier dispositif communicant, **caractérisé en ce qu'**il comprend des moyens pour :
- initialiser une communication avec un autre dispositif communicant, dit second dispositif communicant, au sein d'un réseau IP, en signalant audit second dispositif communicant que ledit premier dispositif communicant est compatible avec les communications UDP, User Datagram Protocol, à chemins multiples,
- envoyer des données selon le protocole UDP au second dispositif communicant, en incluant dans les messages contenant ces données, quel que soit le chemin utilisé, un même identifiant, dit identifiant de contexte (Context_ID), permettant au second dispositif communicant de corréler l'ensemble des datagrammes UDP associés à une même communication UDP à chemins multiples, et
- recevoir des données selon le protocole UDP de la part du second dispositif communicant, en détectant dans les messages contenant ces données, quel que soit le chemin utilisé, un même identifiant, dit identifiant de contexte (Context_ID), permettant au premier dispositif communicant de corréler l'ensemble des datagrammes UDP associés à une même communication UDP à chemins multiples.

6. Dispositif communicant selon la revendication 5, **caractérisé en ce qu'**il comprend en outre des moyens pour insérer dans les messages qu'il émet un jeton de sécurité permettant au récepteur de ces messages d'en authentifier l'émetteur.

7. Dispositif communicant selon la revendication 5 ou la revendication 6, **caractérisé en ce qu'**il comprend en outre des moyens pour insérer dans les messages qu'il émet une information permettant au récepteur de ces messages de les traiter dans leur ordre d'émission.

8. Dispositif communicant selon l'une quelconque des revendications 5 à 7, **caractérisé en ce qu'**il embarque un relais comprenant des moyens pour émettre à destination d'un second dispositif communicant un message d'établissement de session selon le protocole de transport TCP, Transmission Control Protocol, contenant une option dédiée apte à signaler audit second dispositif communicant que le premier dispositif communicant est compatible avec les communications UDP à chemins multiples.

9. Dispositif communicant selon l'une quelconque des revendications 5 à 8, **caractérisé en ce qu'**il comprend en outre des moyens pour :
- prendre en compte, dans un message d'établissement de session selon le protocole de transport TCP reçu de la part d'un autre dispositif communicant, dit troisième dispositif communicant, une option dédiée apte à signaler audit premier dispositif communicant que ledit troisième dispositif communicant est compatible avec les communications UDP à chemins multiples,
- émettre un message de réponse selon le protocole de transport TCP contenant ladite option dédiée, et
- envoyer des données au troisième dispositif communicant et/ou recevoir des données émises par le troisième dispositif communicant, en utilisant une communication UDP à chemins multiples.

10. Dispositif communicant selon l'une quelconque des revendications 5 à 9, **caractérisé en ce qu'**il comprend un dispositif-client (T), un serveur de contenus (S), ou un concentrateur de trafic (C).

11. Moyen de stockage de données inamovible, ou partiellement ou totalement amovible, comportant des instructions de code de programme informatique pour l'exécution des étapes d'un procédé de communication selon l'une quelconque des revendications 1 à 4.

12. Programme d'ordinateur téléchargeable depuis un réseau de communications et/ou stocké sur un support lisible par ordinateur et/ou exécutable par un microprocesseur, **caractérisé en ce qu'**il comprend des instructions pour l'exécution des étapes d'un procédé de communication selon l'une quelconque des revendications 1 à 4, lorsqu'il est exécuté sur un ordinateur.

## Patentansprüche

1. Kommunikationsverfahren in einem IP-Netz, das die folgenden Schritte umfasst:
a) eine erste kommunizierende Vorrichtung initialisiert eine Kommunikation mit einer zweiten kommunizierenden Vorrichtung, indem sie der zweiten kommunizierenden Vorrichtung signalisiert, dass die erste kommunizierende Vorrichtung mit Mehrwegkommunikation auf Grundlage des Transportprotokolls UDP, User Datagram Protocol, kompatibel ist, und
b) wenn die zweite kommunizierende Vorrichtung ihrerseits auch mit der UDP-Mehrwegkommunikation kompatibel ist:
- schickt die erste kommunizierende Vorrichtung Daten an die zweite Vorrichtung gemäß dem Transportprotokoll UDP, indem sie in die Nachrichten, die diese Daten enthalten, unabhängig vom genutzten Weg eine gleiche Kennung, Kontextkennung (Context_ID) genannt, aufnimmt, die es der zweiten kommunizierenden Vorrichtung ermöglicht, die gesamten UDP-Datagramme, die zu ein und derselben UDP-Mehrwegkommunikation gehören, in Beziehung zu setzen, und/oder
- schickt die zweite kommunizierende Vorrichtung Daten an die erste Vorrichtung gemäß dem Transportprotokoll UDP, indem sie in die Nachrichten, die diese Daten enthalten, unabhängig vom genutzten Weg eine gleiche Kennung, Kontextkennung (Context_ID) genannt, aufnimmt, die es der ersten kommunizierenden Vorrichtung ermöglicht, die gesamten UDP-Datagramme, die zu ein und derselben UDP-Mehrwegkommunikation gehören, in Beziehung zu setzen.

2. Kommunikationsverfahren nach Anspruch 1, **dadurch gekennzeichnet, dass** die erste kommunizierende Vorrichtung und/oder die zweite kommunizierende Vorrichtung außerdem in die Nachrichten ein Sicherheitstoken einfügt, das es dem Empfänger dieser Nachrichten ermöglicht, deren Sender zu authentifizieren.

3. Kommunikationsverfahren nach Anspruch 1 oder Anspruch 2, **dadurch gekennzeichnet, dass** die erste kommunizierende Vorrichtung und/oder die zweite kommunizierende Vorrichtung in die Nachrichten außerdem eine Information einfügt, die es dem Empfänger dieser Nachrichten ermöglicht, sie in ihrer Sendereihenfolge zu bearbeiten.

4. Kommunikationsverfahren nach einem der Ansprüche 1 bis 3, **dadurch gekennzeichnet, dass** es die folgenden Schritte umfasst:
- eine erste kommunizierende Vorrichtung, die mit der UDP-Mehrwegkommunikation kompatibel ist, sendet eine UDP-Nachricht, die durch ein Relais in dieser ersten kommunizierenden Vorrichtung abgefangen wird,
- das Relais sendet an die zweite kommunizierende Vorrichtung eine Sitzungseröffnungsnachricht gemäß dem Transportprotokoll TCP, Transmission Control Protocol, die eine dedizierte Option enthält, die dazu geeignet ist, der zweiten kommunizierenden Vorrichtung zu signalisieren, dass die erste kommunizierende Vorrichtung mit der UDP-Mehrwegkommunikation kompatibel ist, und
- wenn die zweite kommunizierende Vorrichtung ihrerseits auch mit der UDP-Mehrwegkommunikation kompatibel ist, sendet sie eine Antwortnachricht gemäß dem Transportprotokoll TCP, in die sie die dedizierte Option einfügt, dann sendet die erste kommunizierende Vorrichtung Daten an die zweite kommunizierende Vorrichtung und/oder die zweite kommunizierende Vorrichtung sendet Daten an die erste kommunizierende Vorrichtung, indem sie eine UDP-Mehrwegkommunikation nutzt.

5. Kommunizierende Vorrichtung, erste kommunizierende Vorrichtung genannt, **dadurch gekennzeichnet, dass** sie Mittel zu Folgendem umfasst:
- Initialisieren einer Kommunikation mit einer anderen kommunizierenden Vorrichtung, zweite kommunizierende Vorrichtung genannt, in einem IP-Netz, indem sie der zweiten kommunizierenden Vorrichtung signalisiert, dass die erste kommunizierende Vorrichtung mit der Mehrwegkommunikation nach UDP, User Datagram Protocol, kompatibel ist,
- Senden von Daten gemäß dem Protokoll UDP an die zweite kommunizierende Vorrichtung, indem sie in die Nachrichten, die diese Daten enthalten, unabhängig vom genutzten Weg eine gleiche Kennung, Kontextkennung (Context_ID) genannt, aufnimmt, die es der zweiten kommunizierenden Vorrichtung ermöglicht, die gesamten UDP-Datagramme, die zu ein und derselben UDP-Mehrwegkommunikation gehören, in Beziehung zu setzen, und
- Empfangen von Daten von der zweiten kommunizierenden Vorrichtung gemäß dem Protokoll UDP, indem sie in den Nachrichten, die diese Daten enthalten, unabhängig vom genutzten Weg eine gleiche Kennung, Kontextkennung (Context_ID) genannt, erkennt, die es der ersten kommunizierenden Vorrichtung ermöglicht, die gesamten UDP-Datagramme, die zu ein und derselben UDP-Mehrwegkommunikation gehören, in Beziehung zu setzen.

6. Kommunizierende Vorrichtung nach Anspruch 5, **dadurch gekennzeichnet, dass** sie außerdem Mittel zum Einfügen eines Sicherheitstokens in die Nachrichten, die sie sendet, umfasst, das es dem Empfänger dieser Nachrichten ermöglicht, deren Sender zu authentifizieren.

7. Kommunizierende Vorrichtung nach Anspruch 5 oder Anspruch 6, **dadurch gekennzeichnet, dass** sie außerdem Mittel zum Einfügen einer Information in die Nachrichten, die sie sendet, umfasst, die es dem Empfänger dieser Nachrichten ermöglicht, sie in ihrer Sendereihenfolge zu bearbeiten.

8. Kommunizierende Vorrichtung nach einem der Ansprüche 5 bis 7, **dadurch gekennzeichnet, dass** sie ein Relais enthält, das Mittel zum Senden einer Sitzungseröffnungsnachricht an die zweite kommunizierende Vorrichtung gemäß dem Transportprotokoll TCP, Transmission Control Protocol, umfasst, die eine dedizierte Option enthält, die dazu geeignet ist, der zweiten kommunizierenden Vorrichtung zu signalisieren, dass die erste kommunizierende Vorrichtung mit der UDP-Mehrwegkommunikation kompatibel ist.

9. Kommunizierende Vorrichtung nach einem der Ansprüche 5 bis 8, **dadurch gekennzeichnet, dass** sie außerdem Mittel zu Folgendem umfasst:
- Berücksichtigen einer dedizierten Option in einer Sitzungseröffnungsnachricht gemäß dem Transportprotokoll TCP, die von einer anderen kommunizierenden Vorrichtung, dritte kommunizierende Vorrichtung genannt, empfangen wurde und dazu fähig ist, der ersten kommunizierenden Vorrichtung zu signalisieren, dass die dritte kommunizierende Vorrichtung mit der UDP-Mehrwegkommunikation kompatibel ist,
- Ausgeben einer Antwortnachricht gemäß dem Transportprotokoll TCP, die die dedizierte Option enthält, und
- Senden der Daten an die dritte kommunizierende Vorrichtung und/oder Empfangen der von der dritten kommunizierenden Vorrichtung gesendeten Daten unter Verwendung einer UDP-Mehrwegkommunikation.

10. Kommunizierende Vorrichtung nach einem der Ansprüche 5 bis 9, **dadurch gekennzeichnet, dass** sie eine Client-Vorrichtung (T), einen Inhaltsserver (S) oder einen Verkehrskonzentrator (C) umfasst.

11. Nicht entfernbares oder teilweise oder ganz entfernbares Speichermedium, das informationstechnische Programmcodeanweisungen zur Ausführung der Schritte eines Kommunikationsverfahrens nach einem der Ansprüche 1 bis 4 umfasst.

12. Computerprogramm, das aus einem Kommunikationsnetz herunterladbar und/oder auf einem computerlesbaren Medium und/oder durch einen Mikroprozessor ausführbar ist, **dadurch gekennzeichnet, dass** es Anweisungen zur Ausführung der Schritte eines Kommunikationsverfahrens nach einem der Ansprüche 1 bis 4 umfasst, wenn es auf einem Computer ausgeführt wird.

## Claims

1. Method for communicating in an IP network, comprising the following steps:
a) a first communicating device initializes a communication with a second communicating device by signaling, to said second communicating device, that said first communicating device is compatible with multipath communications based on the UDP, User Datagram Protocol, transport protocol, and
b) if the second communicating device is itself also compatible with multipath UDP communications:
- the first communicating device sends data to the second device in accordance with the UDP transport protocol, by including, in the messages containing these data regardless of the path that is used, one and the same identifier, called context identifier (Context_ID), allowing the second communicating device to correlate all of the UDP datagrams associated with one and the same multipath UDP communication, and/or
- the second communicating device sends data to the first device in accordance with the UDP transport protocol, by including, in the messages containing these data regardless of the path that is used, one and the same identifier, called context identifier (Context_ID), allowing the first communicating device to correlate all of the UDP datagrams associated with one and the same multipath UDP communication.

2. Communication method according to Claim 1, **characterized in that** the first communicating device and/or the second communicating device furthermore inserts, into said messages, a security token allowing the receiver of these messages to authenticate the sender thereof.

3. Communication method according to Claim 1 or Claim 2, **characterized in that** the first communicating device and/or the second communicating device furthermore inserts, into said messages, an item of information allowing the receiver of these messages to process them in the order in which they were sent.

4. Communication method according to any one of Claims 1 to 3, **characterized in that** it comprises the following steps:
- a first communicating device, compatible with multipath UDP communications, sends a UDP message, which is intercepted by a relay embedded in this first communicating device,
- said relay sends, to a second communicating device, a message for establishing a session in accordance with the TCP, Transmission Control Protocol, transport protocol, containing a dedicated option able to signal, to said second communicating device, that the first communicating device is compatible with multipath UDP communications, and
- if the second communicating device is itself also compatible with multipath UDP communications, it sends a response message in accordance with the TCP transport protocol, into which it inserts said dedicated option, and then the first communicating device sends data to the second communicating device and/or the second communicating device sends data to the first communicating device, using a multipath UDP communication.

5. Communicating device, called first communicating device, **characterized in that** it comprises means for:
- initializing a communication with another communicating device, called second communicating device, within an IP network, by signaling, to said second communicating device, that said first communicating device is compatible with multipath UDP, User Datagram Protocol, communications,
- sending data to the second communicating device in accordance with the UDP protocol, by including, in the messages containing these data regardless of the path that is used, one and the same identifier, called context identifier (Context_ID), allowing the second communicating device to correlate all of the UDP datagrams associated with one and the same multipath UDP communication, and
- receiving data from the second communicating device in accordance with the UDP protocol, by detecting, in the messages containing these data regardless of the path that is used, one and the same identifier, called context identifier (Context_ID), allowing the first communicating device to correlate all of the UDP datagrams associated with one and the same multipath UDP communication.

6. Communicating device according to Claim 5, **characterized in that** it furthermore comprises means for inserting, into the messages that it sends, a security token allowing the receiver of these messages to authenticate the sender thereof.

7. Communicating device according to Claim 5 or Claim 6, **characterized in that** it furthermore comprises means for inserting, into the messages that it sends, an item of information allowing the receiver of these messages to process them in the order in which they were sent.

8. Communicating device according to any one of Claims 5 to 7, **characterized in that** it embeds a relay comprising means for sending, to a second communicating device, a message for establishing a session in accordance with the TCP, Transmission Control Protocol, transport protocol, containing a dedicated option able to signal, to said second communicating device, that the first communicating device is compatible with multipath UDP communications.

9. Communicating device according to any one of Claims 5 to 8, **characterized in that** it furthermore comprises means for:
- taking into account, in a message for establishing a session in accordance with the TCP transport protocol received from another communicating device, called third communicating device, a dedicated option able to signal, to said first communicating device, that said third communicating device is compatible with multipath UDP communications,
- sending a response message in accordance with the TCP transport protocol containing said dedicated option, and
- sending data to the third communicating device and/or receiving data sent by the third communicating device, using a multipath UDP communication.

10. Communicating device according to any one of Claims 5 to 9, **characterized in that** it comprises a client device (T), a content server (S) or a traffic hub (C).

11. Fixed or partly or fully removable data storage means including computer program code instructions for executing the steps of a communication method according to any one of Claims 1 to 4.

12. Computer program downloadable from a communications network and/or stored on a computer-readable medium and/or able to be executed by a microprocessor, **characterized in that** it comprises instructions for executing the steps of a communication method according to any one of Claims 1 to 4 when it is executed on a computer.
